# EUROPÄISCHE PATENTSCHRIFT

(11) **EP 2 577 882 B1**
(45) Veröffentlichungstag und Bekanntmachung des Hinweises auf die Patenterteilung: **11.07.2018**
(21) Anmeldenummer: 11711854.7
(22) Anmeldetag: 28.03.2011
(51) Int. Cl.: H04B 3/56

(54) **STROMLEITUNGS-KOMMUNIKATIONSKOPPLER**
POWER LINE COMMUNICATIONS COUPLER
COUPLEUR DE COMMUNICATION AVEC UNE LIGNE D'ALIMENTATION

(30) Priorität: 04.06.2010 DE 102010023111
(43) Veröffentlichungstag der Anmeldung: 10.04.2013
(73) Patentinhaber: Siemens Aktiengesellschaft, 80333 München (DE); Griesmayer, Erich, 1010 Wien (AT)
(72) Erfinder: DIETRICH, Karl, 85258 Weichs (DE); GRIESMAYER, Erich, A-1010 Wien (AT)
(74) Vertreter: Maier, Daniel Oliver
(86) Internationale Anmeldenummer: PCT/EP2011/054689
(87) Internationale Veröffentlichungsnummer: WO 2011/151093

(56) Entgegenhaltungen:
- US-A- 3 231 837
- US-A- 5 770 996

## Beschreibung

Die vorliegende Erfindung bezieht sich auf ein Verfahren zum Ein- und Auskoppeln von Signalen bzw. Daten unterschiedlicher Frequenz in ein bzw. aus einem Strom- bzw. Energienetz, beispielsweise einem elektrischen Energieversorgungsnetz, wobei die Signale bzw. Daten an einem Eingang einer Koppelvorrichtung bereitgestellt werden und unter Zwischenschaltung wenigstens eines Transformators über einen Ausgang der Koppelvorrichtung in das Strom- bzw. Energienetz eingekoppelt bzw. eingespeist werden bzw. aus dem Strom- bzw. Energienetz ausgekoppelt werden. Die vorliegende Erfindung bezieht sich darüber hinaus auf eine Vorrichtung zum Ein- und Auskoppeln von Signalen bzw. Daten unterschiedlicher Frequenz in ein bzw. aus einem Strom- bzw. Energienetz mit einem Eingang für die Eingabe der Signale bzw. Daten, wenigstens einem Transformator und einem Ausgang für ein Einkoppeln bzw. Einspeisen in das Stromnetz bzw. Auskoppeln aus dem Strom- bzw. Energienetz.

Verfahren und Vorrichtungen der eingangs genannten Art sind bekannt, um beispielsweise über Strom- bzw. Energienetze zusätzlich Signale bzw. Daten einer genau definierten Signalfrequenz zu übertragen. Hierbei werden beispielsweise gemäß der Norm EN 50065 der CENELEC in einem Frequenzband von 9 kHz bis 150 kHz (so genanntes "CENELEC Frequenzband") Daten bzw. Signale übertragen, während gemäß anderen Normen (z.B. IEEE P1901 Draft Standard), welche üblicherweise als Breitband-Kommunikation bezeichnet sind, Daten bzw. Signale in einem Bandbreitenbereich von etwa 1 MHz bis 30 MHz übertragen werden. Hierbei finden an sich bekannte und insbesondere normierte Protokolle Verwendung, um eine Übertragung einer Vielzahl von Daten bzw. Signalen in einem Strom- bzw. Energienetz bzw. über einen Power Line Carrier bzw. im Zusammenhang mit so genannten Stromnetzen mit intelligenten Komponenten (auch als. "Smart Grids" bezeichnet) zur Verfügung zu stellen.

Nachteilig bei bekannten Verfahren und Vorrichtungen ist neben der Tatsache eines Erfordernisses einer Bereitstellung einer ausreichend zuverlässigen Kopplung bzw. Einkopplung und Auskopplung von Signalen bzw. Daten in das bzw. aus dem Strom- bzw. Energienetz die oben erwähnte Unterscheidung in voneinander getrennte und festgelegte bzw. normierte Frequenzbereiche, so dass für die unterschiedlichen Frequenzbänder bzw. Frequenzbereiche unterschiedliche Koppelvorrichtungen zur Verfügung gestellt werden müssen.

Aus der Druckschrift US5770996 A ist ein gattungsgemäßes Verfahren bekannt. Ferner ist die Druckschrift US3231837 A bekannt, die sich mit einer Transformatorvorrichtung für einen Einsatz in Audioverstärkern beschäftigt.

Die vorliegende Erfindung zielt darauf ab, ein Verfahren sowie eine Vorrichtung der eingangs genannten Art zur Verfügung zu stellen, bei welchen die oben genannten Nachteile vermieden werden und insbesondere eine Kopplung mit einer maximalen Leistungseinbringung in unterschiedlichen Frequenzbändern bzw. Frequenzbereichen mit einem gemeinsamen Verfahren sowie einer gemeinsamen Vorrichtung ermöglicht wird.

Zur Lösung dieser Aufgaben ist ein Verfahren der eingangs genannten Art dadurch gekennzeichnet, dass in Abhängigkeit von der Frequenz der Signale eine Kopplung in das bzw. aus dem Stromnetz über unterschiedliche Transformatoren einer gemeinsamen Koppelvorrichtung durchgeführt wird. Dadurch, dass erfindungsgemäß in Abhängigkeit von der Frequenz der Signale bzw. Daten eine Kopplung über unterschiedliche Transformatoren einer gemeinsamen Koppelvorrichtung durchgeführt wird, kann auf die beim Stand der Technik übliche bzw. erforderliche Bereitstellung von unterschiedlichen Koppelvorrichtungen verzichtet werden. Es muss somit insbesondere nicht vorab bekannt sein, in welchem Frequenzband bzw. Frequenzbereich die zu koppelnden Daten bzw. Signale vorliegen, um derart bereits vor Be- bzw. Verarbeitung in einer Koppelvorrichtung eine entsprechende Trennung bzw. Unterteilung zu ermöglichen. Erfindungsgemäß wird es somit möglich, unabhängig von der Frequenz der zu koppelnden Signale bzw. Daten diese einer einzigen Koppelvorrichtung zuzuführen, wobei in Abhängigkeit von der Frequenz der Signale in der gemeinsamen Koppelvorrichtung die Kopplung in das bzw. aus dem Strom- bzw. Energienetz über unterschiedliche Transformatoren vorgenommen wird. Es lässt sich somit nicht nur der Aufwand zur Durchführung des erfindungsgemäßen Verfahrens durch Bereitstellung einer einzigen und gemeinsamen Koppelvorrichtung unabhängig von der Frequenz, insbesondere im CENELEC Frequenzband, als auch in einem Breitbandnetz bzw. für eine Breitband-Kommunikation verringern, sondern es kann auch auf eine aufwändige Trennung bzw. Unterteilung vor der Koppelvorrichtung und somit auf die Bereitstellung unterschiedlicher Koppelvorrichtungen für einzelne Frequenzbänder verzichtet werden. Derart wird eine Kopplungsmöglichkeit unabhängig von der Frequenz der Signale bzw. Daten zur Verfügung gestellt.

Für eine besonders zuverlässige und einfache Trennung wird erfindungsgemäß bevorzugt vorgeschlagen, dass eine Trennung der Signale in Abhängigkeit von der Frequenz durch einen wenigstens einem Transformator zur Kopplung von Signalen hoher Frequenz vorgeschalteten Kondensator und/oder durch ein wenigstens einem Transformator zur Kopplung von Signalen niedriger Frequenz vorgeschaltetes induktives Element durchgeführt wird. Es kann somit in einfacher und zuverlässiger und im Wesentlichen selbsttätiger Weise ein Unterteilen in einzelne Frequenzbänder bzw. Frequenzbereiche vorgenommen werden, wobei, wie oben erwähnt, eine Kopplung über eine gemeinsame Koppelvorrichtung sichergestellt wird.

Gemäß einer besonders bevorzugten Ausführungsform wird in diesem Zusammenhang vorgeschlagen, dass eine Unterteilung der Frequenz zur Kopplung über die unterschiedlichen Transformatoren zwischen Frequenzen größer und kleiner als etwa 1 MHz vorgenommen wird. Durch eine derartige Wahl einer Unterteilung der Frequenzen kann insbesondere mit der gemeinsamen Koppelvorrichtung eine Unterteilung im Hinblick auf das CENELEC Frequenzband als auch eine Breitband-Kommunikation zur Verfügung gestellt werden, wobei für letztere insbesondere Frequenzbereiche von größer als etwa 1 MHz und beispielsweise bis etwa 30 MHz vorgesehen sind.

Um selbst über einen vergleichsweise großen Frequenzbereich, im Wesentlichen beginnend bei sehr niedrigen Frequenzen von einigen kHz bis zu hohen Frequenzen von beispielsweise bis zu 30 oder 50 MHz, eine im Wesentlichen gleichmäßige Kopplungsleistung zur Verfügung zu stellen, wird gemäß einer weiters bevorzugten Ausführungsform vorgeschlagen, dass für Signale definierter bzw. definierbarer Frequenzbereiche, insbesondere Signale niedriger und/oder hoher Frequenz zusätzlich eine Frequenzkompensation durchgeführt wird. Durch eine derartige Frequenzkompensation kann über die unterschiedlichsten Frequenzbänder bzw. Frequenzbereiche eine im Wesentlichen gleichmäßige und insbesondere optimierte bzw. maximale Verstärkung im Bereich der Kopplung unabhängig von der zu koppelnden Frequenz zur Verfügung gestellt werden.

Für eine derartige gleichmäßige Verstärkung über große Frequenzbereiche wird darüber hinaus vorgeschlagen, dass die Frequenzkompensation unter insbesondere variabler Anhebung der Signalamplituden durchgeführt wird, wie dies einer weiters bevorzugten Ausführungsform des erfindungsgemäßen Verfahrens entspricht.

Zur Verbesserung der Übertragungsleistung wird gemäß einer weiters bevorzugten Ausführungsform vorgeschlagen, dass Signale hoher Frequenz nach den Transformatoren über eine insbesondere einstellbare Kapazität geführt werden.

Für eine Optimierung der Potentialverteilung insbesondere unter Berücksichtigung der stark unterschiedlichen Frequenzbereiche für die zu koppelnden Daten bzw. Signale wird gemäß einer weiters bevorzugten Ausführungsform vorgeschlagen, dass zur Potentialverteilung Ableitspulen mit unterschiedlicher Induktivität den Transformatoren nachgeschaltet werden.

Zur Lösung der eingangs genannten Aufgaben ist darüber hinaus eine Vorrichtung der oben genannten Art im Wesentlichen dadurch gekennzeichnet, dass Transformatoren unterschiedlicher Bandbreite zur Kopplung von Signalen unterschiedlicher Frequenz mit dem gemeinsamen Eingang und Ausgang der Vorrichtung gekoppelt sind. Derart reicht, wie oben bereits erwähnt, eine einzige bzw. gemeinsame Koppelvorrichtung für unterschiedliche Frequenzen und insbesondere unterschiedliche Frequenzbänder bei maximaler Leistungseinkopplung bzw. -einbringung aus.

Für eine zuverlässige Trennung einzelner Frequenzbereiche bzw. Frequenzbänder wird gemäß einer bevorzugten Ausführungsform vorgeschlagen, dass wenigstens einem Transformator zur Kopplung von Signalen hoher Frequenz ein Kondensator zum Blockieren von Signalen niedriger Frequenz und/oder wenigstens einem Transformator zur Kopplung von Signalen niedriger Frequenz ein induktives Element zum Blockieren von Signalen hoher Frequenz vorgeschaltet ist.

Im Zusammenhang mit einer Trennung einzelner Frequenzbänder, welche beispielsweise im Wesentlichen aus normierten bzw. standardisierten Frequenzbereichen bzw. Frequenzbändern bestehen, wird gemäß einer weiters bevorzugten Ausführungsform vorgeschlagen, dass die Kapazität des Kondensators und/oder die Induktivität des induktiven Elements für eine Trennung von Signalen mit einer Frequenz von größer und kleiner als etwa 1 MHz gewählt ist. Derart kann eine einfache Trennung bzw. Unterteilung beispielsweise zwischen dem CENELEC Frequenzband und einer Breitband-Kommunikation zur Verfügung gestellt werden. Durch eine derartige Trennung in Abhängigkeit von der Frequenz kann für die vorzunehmende Kopplung der Daten bzw. Signale unterschiedlicher Frequenz somit in der gemeinsamen Koppelvorrichtung auf erprobte und wenigstens teilweise bekannte Elemente zur Kopplung bzw. Leistungseinbringung zurückgegriffen werden.

Zur weiteren Unterstützung der Kopplung der einzelnen unterschiedlichen Frequenzbänder und zur Erzielung einer maximalen Leistungseinbringung insbesondere für Signale hoher Frequenz wird gemäß einer weiters bevorzugten Ausführungsform vorgeschlagen, dass dem wenigstens einen Transformator zur Kopplung von Signalen hoher Frequenz ein weiterer Kondensator mit von der Kapazität des dem Transformator vorgeschalteten Kondensators unterschiedlicher und insbesondere wählbarer Kapazität nachgeschaltet ist.

Um ein im Wesentlichen gleichmäßiges Niveau einer optimierten Leistungseinbringung über große Frequenzbereiche zur Verfügung zu stellen, wird gemäß einer weiters bevorzugten Ausführungsform vorgeschlagen, dass für Signale definierter bzw. definierbarer Frequenzbereiche, insbesondere Signale niedriger und/oder hoher Frequenz zusätzlich eine Frequenzkompensation vorgesehen ist. Zur Bereitstellung einer konstruktiv einfachen Ausführungsform wird darüber hinaus vorgeschlagen, dass zur Frequenzkompensation ein aktives Element variabler Verstärkung vorgesehen ist, wie dies einer weiters bevorzugten Ausführungsform der erfindungsgemäßen Vorrichtung entspricht.

Für eine ordnungsgemäße Durchführung der Einkopplung bzw. Auskopplung und unter Berücksichtigung der unterschiedlichen Frequenzbereiche wird darüber hinaus bevorzugt vorgeschlagen, dass dem Ausgang der Vorrichtung eine Mehrzahl von Ableitspulen unterschiedlicher Induktivität vorgeschaltet ist.

Für eine ordnungsgemäße Kopplung wird darüber hinaus vorgeschlagen, dass in an sich bekannter Weise der Vorrichtung ein Koppelkondensator und eine Trennfunkenstrecke zugeordnet ist, wie dies einer weiters bevorzugten Ausführungsform der erfindungsgemäßen Vorrichtung entspricht.

Zur Bereitstellung der erfindungsgemäß vorgesehenen Kopplung von Signalen bzw. Daten unterschiedlichster Frequenzbänder bzw. Frequenzbereiche wird darüber hinaus bevorzugt vorgeschlagen, dass der Koppelkondensator eine Kapazität von wenigstens etwa 1 nF, bevorzugt wenigstens etwa 10 nF, besonders bevorzugt wenigstens etwa 100 nF aufweist.

Die Erfindung wird nachfolgend anhand von in der beiliegenden Zeichnung schematisch dargestellten Ausführungsbeispielen näher erörtert. In dieser zeigen:
- Fig. 1: einen schematischen Aufbau eines Systems, enthaltend eine Vorrichtung zum Ein- und Auskoppeln von Signalen bzw. Daten;
- Fig. 2: in detaillierter Darstellung einen schematischen Aufbau einer Koppelvorrichtung;
- Fig. 3: ein Diagramm des Übertragungsverhaltens der Koppelvorrichtung gemäß Fig. 2 über einen Frequenzbereich von 9 kHz bis 30 MHz unter Einsatz eines eine vergleichsweise hohe Kapazität aufweisenden Koppelkondensators;
- Fig. 4: eine schematische Darstellung einer Vorrichtung zur Frequenzkompensation insbesondere in einem Bereich niedriger Frequenzen;
- Fig. 5: ein Diagramm der Übertragungs- bzw. Verstärkungsfunktion einer Frequenzkompensation für niedrige Frequenzen; und
- Fig. 6: eine Darstellung ähnlich zu Fig. 3 einer Übertragungsfunktion, wobei in Fig. 6a die Übertragungsfunktion ohne Frequenzkompensation und in Fig. 6b die Übertragungsfunktion mit einer Frequenzkompensation dargestellt ist.

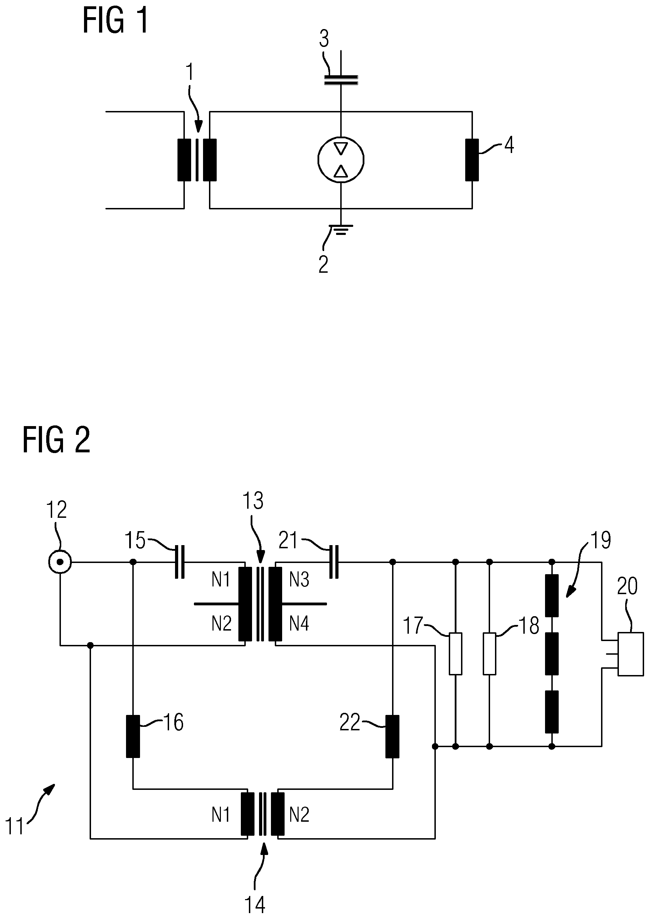

In Fig. 1 ist schematisch ein Aufbau für ein Ein- und Auskoppeln von Signalen bzw. Daten unterschiedlicher Frequenz in ein bzw. aus einem Strom- bzw. Energienetz dargestellt, wobei neben einer Koppelvorrichtung 1, wie sie im Detail in Fig. 2 dargestellt ist, eine Trennfunkenstrecke 2, ein Koppelkondensator 3 sowie eine Ableitspule 4 angedeutet sind.

Ein derartiger, in Fig. 1 dargestellter Aufbau wird für ein Ein- und Auskoppeln von Signalen bzw. Daten unterschiedlicher Frequenz in ein bzw. aus einem nicht näher dargestellten Strom- bzw. Energienetz verwendet. Bei bekannten Ausführungsformen ist die Koppelvorrichtung 1 für bestimmte Frequenzbereiche bzw. Frequenzbänder, und beispielsweise für das CENELEC Frequenzband für Frequenzen von etwa 9 kHz bis etwa 150 kHz oder demgegenüber für ein Breitband-Frequenzband von etwa 1 MHz bis etwa 30 MHz ausgebildet, so dass für ein Ein- bzw. Auskoppeln von Signalen bzw. Daten vorab der Frequenzbereich bzw. das Frequenzband bekannt bzw. vorgegeben sein muss, um ein Ein- und Auskoppeln zu ermöglichen.

Zur Bereitstellung einer Ein- und Auskopplung von Signalen bzw. Daten unterschiedlicher Frequenz und insbesondere unterschiedlicher Frequenzbänder, wie sie oben angeführt sind, und ohne das Erfordernis, abgestimmt auf die verwendete Koppelvorrichtung lediglich Signale bzw. Daten eines bestimmten Frequenzbands zur Verfügung zu stellen, ist in Fig. 2 schematisch der Aufbau einer Koppelvorrichtung 11 dargestellt, bei welcher an einem Eingang 12 Signale bzw. Daten unterschiedlicher Frequenz, welche nicht bekannt ist bzw. sein muss, zur Verfügung gestellt werden.

Aus Fig. 2 ist ersichtlich, dass die Koppelvorrichtung 11 Transformatoren 13 und 14 aufweist, wobei der Transformator 13 für eine Kopplung bzw. Übertragung von hohen Frequenzen, beispielsweise im Breitband-Frequenzbereich von etwa 1 MHz bis etwa 30 MHz ausgebildet sind, während der Transformator 14 für eine Übertragung von niederen Frequenzen, beispielsweise im CENELEC Frequenzband von etwa 9 kHz bis etwa 150 kHz ausgebildet ist.

Für eine Trennung der Signale vor einer Kopplung bzw. Übertragung über die Transformatoren 13 oder 14 ist dem Transformator 13 ein Kondensator 15 vorgeschaltet, welcher ein Passieren von Signalen bzw. Daten niedriger Frequenz zu dem Transformator 13 verhindert. Demgemäß werden entsprechend niedere Frequenzen über den Transformator 14 übertragen.

Anstelle des zur Trennung der Signale bzw. Daten in Abhängigkeit von der Frequenz eingesetzten Kondensators 15 und/oder zusätzlich zu diesem ist dem Transformator 14 ein induktives Element 16 vorgeschaltet, welches ein Passieren von Signalen bzw. Daten hoher Frequenz verhindert, so dass insbesondere durch Bereitstellung der Elemente 15 und 16 eine Unterteilung bzw. Trennung in Abhängigkeit von der Frequenz der am Eingang 12 anliegenden Signale bzw. Daten erfolgt. Durch entsprechende Wahl der Parameter des Kondensators 15 als auch des induktiven Elements 16 wird beispielsweise eine Trennung zwischen Frequenzen insbesondere größer und kleiner als etwa 1 MHz vorgenommen, um derart eine Trennung der im Wesentlichen normierten bzw. standardisierten Frequenzbänder CENELEC und Breitband zur Verfügung zu stellen.

Die über die Transformatoren 13 bzw. 14 übertragenen Signale bzw. Daten unterschiedlicher Frequenz bzw. Frequenzbänder werden in weiterer Folge, und wie an sich bekannt, über Widerstände 17 und 18 sowie eine Mehrzahl von Ableitspulen 19 unterschiedlicher Induktivität zur Berücksichtigung der verschiedenen Frequenzbereiche bzw. Frequenzbänder auf einem schematisch mit 20 angedeuteten Ausgang bereitgestellt.

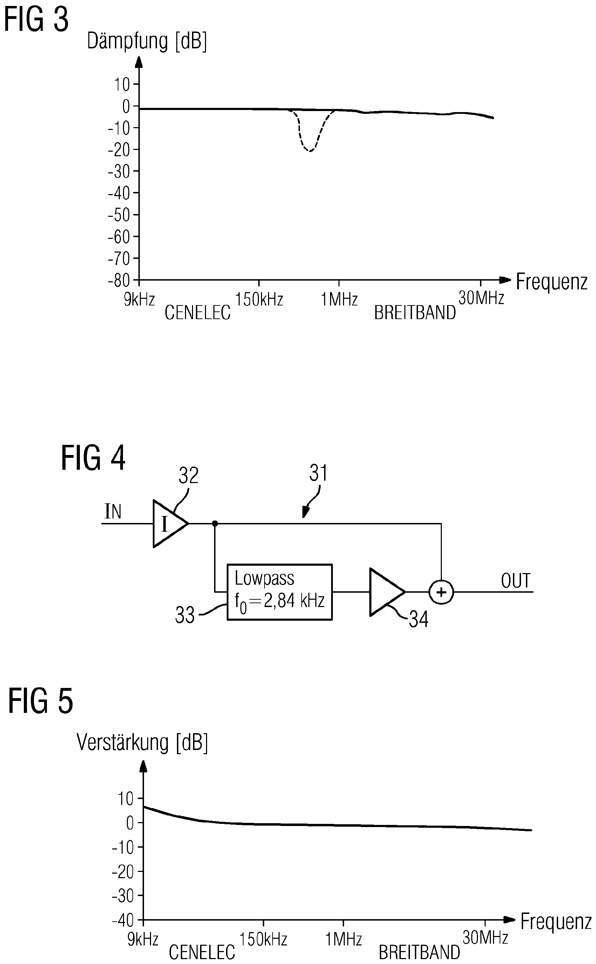

Darüber hinaus ist zur Erzielung der gewünschten Übertragungsfunktion vorgesehen, dass dem Transformator 13 zur Übertragung hoher Frequenzen ein Kondensator 21 nachgeschaltet ist, welcher zur Bereitstellung einer im Wesentlichen linearen Übertragungsfunktion, wie dies nachfolgend erörtert werden wird, eine von der Kapazität des dem Transformator 13 vorgeschalteten Kondensators 15 verschiedene Kapazität aufweist. Bei Einsatz von jeweils gleichen Kapazitätswerten für die Kondensatoren 15 und 21 ergibt sich in dem in Fig. 3 dargestellten Diagramm der Übertragungsfunktion eine markante Abschwächung insbesondere im Bereich knapp unterhalb 1 MHz, so dass das angestrebte lineare Übertragungsverhalten dadurch beeinträchtigt wird. Alternativ könnte dieses stark unterschiedliche Übertragungsverhalten für einen eng begrenzten Frequenzbereich auch zur Unterteilung einzelner Frequenzbänder dienen, wie dies in Fig. 3 angedeutet ist.

In ähnlicher Weise ist dem Transformator 14 ein induktives Element 22 nachgeschaltet.

Die in Fig. 2 dargestellte Koppelvorrichtung 11 kann sowohl zum Ein- als auch Auskoppeln von Signalen bzw. Daten unterschiedlicher Frequenz in ein bzw. aus einem Strom- bzw. Energienetz bzw. einen Power Line Carrier verwendet werden. Bei Einsatz als eine Einkoppelvorrichtung wird am Eingang 12 ein beispielsweise von einem Modem stammendes Signal angelegt, welches nach einer entsprechenden Verstärkung im Sinn einer maximalen Leistungseinbringung am Ausgang 20 in das Strom- bzw. Energienetz eingebracht wird.

Bei einem Auskoppeln aus einem derartigen Strom- bzw. Energienetz wird im Gegensatz dazu am Ausgang 20 das vom Strom- bzw. Energienetz zur Verfügung gestellte Signal in die Koppelvorrichtung 11 eingebracht, während am Eingang 12 dieses Signal weiteren Vorrichtungen, wie beispielsweise Modems, zur Verfügung gestellt werden kann.

In Fig. 3 ist die Übertragungsfunktion der in Fig. 2 dargestellten Koppelvorrichtung 11 dargestellt, wobei ersichtlich ist, dass über unterschiedlichste Frequenzbereiche bzw. Frequenzbänder, insbesondere das CENELEC Frequenzband als auch für eine Breitband-Kommunikation ein im Wesentlichen lineares Übertragungsverhalten bei entsprechend geringer Dämpfung zur Verfügung gestellt werden kann.

Wie oben bereits angedeutet, ist strichliert im Bereich unterhalb von 1 MHz ein deutliches Absinken in der Übertragungsfunktion ersichtlich, falls die Kondensatoren 15 und 21 im Wesentlichen gleiche Kapazitätswerte aufweisen.

Die in Fig. 3 dargestellte Übertragungsfunktion ist insbesondere unter Einsatz eines Koppelkondensators 3, wie er in Fig. 1 dargestellt ist, mit überaus hoher Kapazität von beispielsweise 150 nF erzielbar.

Derartige Koppelkondensatoren entsprechend hoher Kapazität weisen jedoch vergleichsweise große Abmessungen und dadurch bedingt große Herstellungskosten auf und es ist von Betreibern von Strom- bzw. Energienetzen die Verwendung derartiger Koppelkondensatoren derart großer Leistung üblicherweise untersagt, da sie zu empfindlichen Störungen des Strom- bzw. Energienetzes führen können.

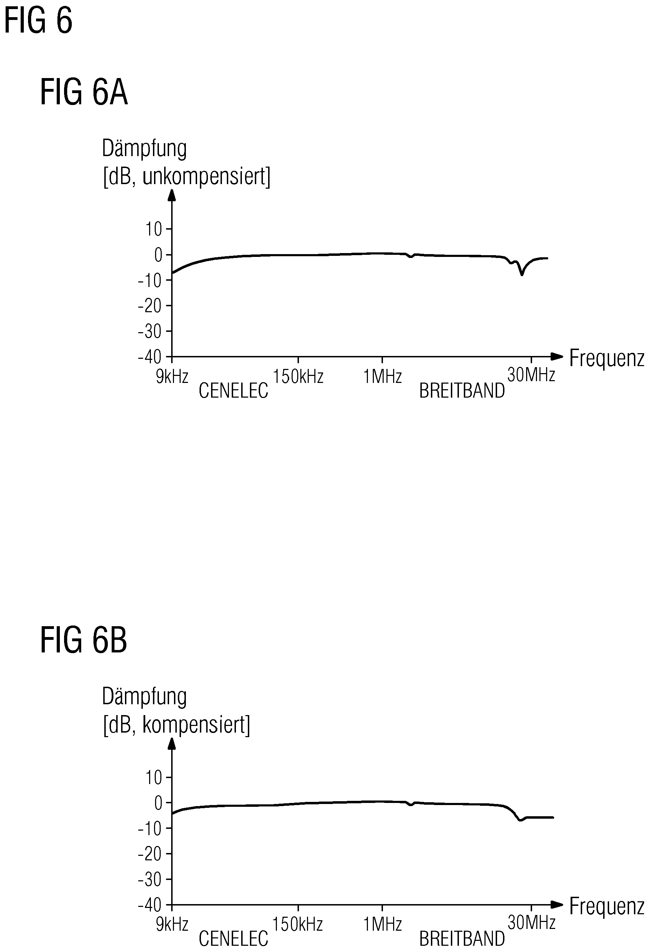

Bei Verwendung von Koppelkondensatoren entsprechend geringerer Kapazität, beispielsweise etwa 1 nF oder bevorzugt mindestens etwa 10 nF, ist jedoch insbesondere für den Bereich niedrigerer Frequenzen im CENELEC Frequenzband eine Verschlechterung des Übertragungsverhaltens unvermeidbar, wie dies in Fig. 6a dargestellt ist.

Für eine Kompensation bei niedrigen Frequenzen findet daher eine Vorrichtung 31 Verwendung, wie sie in Fig. 4 schematisch angedeutet ist. An einem Eingang IN wird das Signal zur Verfügung gestellt, worauf nach Passieren eines Verstärkers 32 ein Tiefpassfilter 33 zur Verfügung gestellt ist, welchem eine insbesondere variable Verstärkung 34 nachgeschaltet ist.

Ein derart im Bereich niedriger Frequenzen verstärktes Signal wird an dem Ausgang OUT zur Verfügung gestellt und kann beispielsweise am Eingang 12 (vgl. Fig. 2) eingebracht werden.

Die mit der Vorrichtung 31 gemäß Fig. 4 erzielbare Frequenzkompensation bzw. -verstärkung ist in Fig. 5 schematisch dargestellt, wobei ersichtlich ist, dass insbesondere bei niedrigen Frequenzen beispielsweise eine Verstärkung von einigen Dezibel erzielbar ist.

Bei Einsatz einer derartigen Frequenzkompensation für niedrige Frequenzen, deren Übertragungsfunktion in Fig. 5 dargestellt ist, für eine Übertragungsfunktion gemäß Fig. 6a ergibt sich die in Fig. 6b dargestellte Übertragungsfunktion, wobei ersichtlich ist, dass anstelle einer ursprünglichen Dämpfung bei 9 kHz von beispielsweise -7,8 dB nach einer Frequenzkompensation eine Dämpfung von beispielsweise -3,70 dB für 9 kHz zur Verfügung gestellt wird, so dass ein stark verbessertes lineares Übertragungsverhalten über den gesamten Frequenzbereich erzielbar ist.

Ebenso lässt sich, wie dies aus einem Vergleich von Fig. 6a und 6b für hohe Frequenzen ersichtlich ist, durch eine entsprechende Frequenzkompensation unter Einsatz einer Vorrichtung entsprechend Fig. 4 bei Verwendung eines entsprechenden Hochpassfilters auch eine Vergleichmäßigung bzw. Anhebung der Übertragungsfunktion für hohe Frequenzen zur Verfügung stellen.

Die in Fig. 6a dargestellte Nicht-Linearität bei hohen Frequenzen ist beispielsweise auf Reflexionen zurückzuführen, welche insbesondere in einem realen Messaufbau wenigstens teilweise nicht verhinderbar sind, so dass durch die vorgeschlagene Frequenzkompensation auch in einem derartigen Bereich hoher Frequenzen eine entsprechende Linearisierung der Übertragungsfunktion über den gesamten Frequenzbereich und insbesondere über unterschiedliche Frequenzbänder bei maximaler Leistungseinbringung erzielbar ist.

## Patentansprüche

1. Verfahren zum Ein- und Auskoppeln von Signalen und/oder Daten unterschiedlicher Frequenz in ein und/oder aus einem Energienetz, wobei die Signale und/oder Daten an einem Eingang einer Koppelvorrichtung bereitgestellt werden und über einen Ausgang der Koppelvorrichtung in das Energienetz eingekoppelt oder aus dem Energienetz ausgekoppelt werden, **dadurch gekennzeichnet, dass**
in Abhängigkeit von der Frequenz der Signale und/oder Daten eine Kopplung in das oder aus dem Energienetz über unterschiedliche Transformatoren (13, 14) der Koppelvorrichtung (11) durchgeführt wird, und wobei
ein hoher und ein niedriger Frequenzbereich definiert sind, wobei die Frequenzbereiche im Frequenzspektrum bei einer Frequenz von 1 MHz aneinander stoßen, und wobei für Signale und/oder Daten niedriger und/oder hoher Frequenz zusätzlich eine Frequenzkompensation (31) durchgeführt wird.

2. Verfahren nach Anspruch 1,
**dadurch gekennzeichnet, dass** die Frequenzkompensation (31) unter variabler Anhebung der Signalamplituden durchgeführt wird.

3. Verfahren nach Anspruch 1 oder 2,
**dadurch gekennzeichnet, dass** eine Trennung der Signale in Abhängigkeit von der Frequenz durch einen wenigstens einem Transformator (13) zur Kopplung von Signalen hoher Frequenz vorgeschalteten Kondensator (15) und/oder durch ein wenigstens einem Transformator (14) zur Kopplung von Signalen niedriger Frequenz vorgeschaltetes induktives Element (16) durchgeführt wird.

4. Verfahren nach einem der Ansprüche 1 bis 3,
**dadurch gekennzeichnet, dass** eine Unterteilung der Frequenz zur Kopplung über die unterschiedlichen Transformatoren (13, 14) zwischen Frequenzen größer und kleiner als 1 MHz vorgenommen wird.

5. Verfahren nach einem der Ansprüche 1 bis 4,
**dadurch gekennzeichnet, dass** Signale hoher Frequenz nach den Transformatoren (13) über eine einstellbare Kapazität (21) geführt werden.

6. Verfahren nach einem der Ansprüche 1 bis 5,
**dadurch gekennzeichnet, dass** zur Potentialverteilung Ableitspulen (19) mit unterschiedlicher Induktivität den Transformatoren (13, 14) nachgeschaltet werden.

7. Vorrichtung zum Ein- und Auskoppeln von Signalen und/oder Daten unterschiedlicher Frequenz in ein und/oder aus einem Energienetz mit einem Eingang für die Eingabe der Signale und/oder Daten und einem Ausgang für ein Einkoppeln in das oder ein Auskoppeln aus dem Energienetz,
**dadurch gekennzeichnet, dass**
Transformatoren (13, 14) unterschiedlicher Bandbreite zur Kopplung von Signalen und/oder Daten unterschiedlicher Frequenz mit dem gemeinsamen Eingang (12) und Ausgang (20) der Vorrichtung (11) gekoppelt sind, und dass
ein hoher und ein niedriger Frequenzbereich definiert sind, wobei die Frequenzbereiche im Frequenzspektrum bei einer Frequenz von 1 MHz aneinander stoßen, und wobei
für Signale und/oder Daten niedriger und/oder hoher Frequenz zusätzlich eine Frequenzkompensation (31) vorgesehen ist.

8. Vorrichtung nach Anspruch 7,
**dadurch gekennzeichnet, dass** zur Frequenzkompensation (31) ein aktives Element (34) variabler Verstärkung vorgesehen ist.

9. Vorrichtung nach Anspruch 7 oder 8,
**dadurch gekennzeichnet, dass** wenigstens einem Transformator (13) zur Kopplung von Signalen hoher Frequenz ein Kondensator (15) zum Blockieren von Signalen niedriger Frequenz und/oder wenigstens einem Transformator (14) zur Kopplung von Signalen niedriger Frequenz ein induktives Element (16) zum Blockieren von Signalen hoher Frequenz vorgeschaltet ist.

10. Vorrichtung nach Anspruch 9,
**dadurch gekennzeichnet, dass** die Kapazität des Kondensators (15) und/oder die Induktivität des induktiven Elements (16) für eine Trennung von Signalen mit einer Frequenz von größer und kleiner als 1 MHz gewählt ist.

11. Vorrichtung nach einem der Ansprüche 7 bis 10,
**dadurch gekennzeichnet, dass** dem wenigstens einen Transformator (13) zur Kopplung von Signalen hoher Frequenz ein weiterer Kondensator (21) mit von der Kapazität des dem Transformator (13) vorgeschalteten Kondensators (15) unterschiedlicher und wählbarer Kapazität nachgeschaltet ist.

12. Vorrichtung nach einem der Ansprüche 7 bis 11,
**dadurch gekennzeichnet, dass** dem Ausgang (20) der Vorrichtung (11) eine Mehrzahl von Ableitspulen (19) unterschiedlicher Induktivität vorgeschaltet ist.

13. Vorrichtung nach einem der Ansprüche 7 bis 12,
**dadurch gekennzeichnet, dass** der Vorrichtung ein Koppelkondensator (3) und eine Trennfunkenstrecke (2) zugeordnet ist.

14. Vorrichtung nach Anspruch 13,
**dadurch gekennzeichnet, dass** der Koppelkondensator (3) eine Kapazität von wenigstens 1 nF oder wenigstens 10 nF aufweist.

15. Vorrichtung nach Anspruch 13,
**dadurch gekennzeichnet, dass** der Koppelkondensator (3) eine Kapazität von wenigstens 100 nF aufweist.

## Claims

1. Method for coupling signals and/or data of different frequency into and/or out of a power grid, wherein the signals and/or data are provided at an input of a coupling apparatus and are coupled into the power grid or out of the power grid via an output of the coupling apparatus, **characterized in that**
the frequency of the signals and/or data is taken as a basis for performing coupling into or out of the power grid by means of different transformers (13, 14) of the coupling apparatus (11), and wherein
a high and a low frequency range are defined, wherein the frequency ranges meet in the frequency spectrum at a frequency of 1 MHz, and wherein frequency compensation (31) is additionally performed for signals and/or data of low and/or high frequency.

2. Method according to Claim 1,
**characterized in that**
the frequency compensation (31) is performed by variably raising the signal amplitudes.

3. Method according to Claim 1 or 2,
**characterized in that**
isolation of the signals on the basis of frequency is performed by a capacitor (15) connected upstream of at least one transformer (13) for coupling signals of high frequency and/or by an inductive element (16) connected upstream of at least one transformer (14) for coupling signals of low frequency.

4. Method according to one of Claims 1 to 3,
**characterized in that**
division of the frequency for coupling by means of the different transformers (13, 14) is performed between frequencies of greater and less than 1 MHz.

5. Method according to one of Claims 1 to 4,
**characterized in that**
signals of high frequency are routed via an adjustable capacitance (21) downstream of the transformers (13).

6. Method according to one of Claims 1 to 5,
**characterized in that**
drain coils (19) having a different inductance are connected downstream of the transformers (13, 14) for potential distribution.

7. Apparatus for coupling signals and/or data of different frequency into and/or out of a power grid having an input for the input of the signals and/or data and an output for coupling into or coupling out of the power grid, **characterized in that**
transformers (13, 14) of different bandwidth for coupling signals and/or data of different frequency are coupled to the common input (12) and output (20) of the apparatus (11), and **in that**
a high and a low frequency range are defined,
wherein the frequency ranges meet in the frequency spectrum at a frequency of 1 MHz, and wherein
frequency compensation (31) is additionally provided for signals and/or data of low and/or high frequency.

8. Apparatus according to Claim 7,
**characterized in that**
an active element (34) of variable gain is provided for frequency compensation (31).

9. Apparatus according to Claim 7 or 8,
**characterized in that**
at least one transformer (13) for coupling signals of high frequency has a capacitor (15) for blocking signals of low frequency connected upstream of it and/or at least one transformer (14) for coupling signals of low frequency has an inductive element (16) for blocking signals of high frequency connected upstream of it.

10. Apparatus according to Claim 9,
**characterized in that**
the capacitance of the capacitor (15) and/or the inductance of the inductive element (16) for isolation of signals is chosen at a frequency of greater and less than 1 MHz.

11. Apparatus according to one of Claims 7 to 10,
**characterized in that**
the at least one transformer (13) for coupling signals of high frequency has a further capacitor (21) connected downstream of it having a selectable capacitance different from the capacitance of the capacitor (15) connected upstream of the transformer (13).

12. Apparatus according to one of Claims 7 to 11,
**characterized in that**
the output (20) of the apparatus (11) has a plurality of drain coils (19) of different inductance connected upstream of it.

13. Apparatus according to one of Claims 7 to 12,
**characterized in that**
the apparatus has an assigned coupling capacitor (3) and an assigned isolating spark gap (2).

14. Apparatus according to Claim 13,
**characterized in that**
the coupling capacitor (3) has a capacitance of at least 1 nF or at least 10 nF.

15. Apparatus according to Claim 13,
**characterized in that**
the coupling capacitor (3) has a capacitance of at least 100 nF.

## Revendications

1. Procédé pour entrer des signaux et/ou des données de fréquence différentes dans un réseau d'énergie et/ou pour les en sortir, dans lequel on met les signaux et/ou les données à disposition à une entrée d'un dispositif de couplage et, par une sortie du dispositif de couplage, on les entre dans le réseau d'énergie ou on les sort du réseau d'énergie,
**caractérisé en ce que**
en fonction de la fréquence des signaux et/ou des données, on effectue une entrée dans le réseau d'énergie ou une sortie du réseau d'énergie par des transformateurs (13, 14) différents du dispositif (11) de couplage et dans lequel un domaine de fréquence plus haut et un domaine de fréquence plus bas sont définis, les domaines de fréquence étant aboutés dans le spectre de fréquence à une fréquence de 1 MHz, et dans lequel, pour des signaux et/ou des données de fréquence plus bas et/ou plus haut, on effectue supplémentairement une compensation (31) de fréquence.

2. Procédé suivant la revendication 1,
**caractérisé en ce que**
l'on effectue la compensation (31) de fréquence en augmentant les amplitudes des signaux de manière variable.

3. Procédé suivant la revendication 1 ou 2,
**caractérisé en ce que**
l'on effectue une séparation des signaux en fonction de la fréquence par un condensateur (15) monté avant au moins un transformateur (13) pour le couplage des signaux de haute fréquence et/ou par un élément (16) inductif monté avant au moins un transformateur (14) pour le couplage des signaux de basse fréquence.

4. Procédé suivant l'une des revendications 1 à 3,
**caractérisé en ce que**
l'on effectue une subdivision des fréquences pour le couplage par les transformateurs (13, 14) différentes entre des fréquences plus grandes et plus petites que 1 MHz.

5. Procédé suivant l'une des revendications 1 à 4,
**caractérisé en ce que**
l'on fait passer des signaux de haute fréquence après les transformateurs (13) par une capacité (21) réglable.

6. Procédé suivant l'une des revendications 1 à 5,
**caractérisé en ce que**
pour la répartition de potentiel, on monte en aval des transformateurs (13, 14) des bobines (19) de dérivation d'inductance différente.

7. Système pour entrer des signaux et/ou des données de fréquence différentes dans un réseau d'énergie et/ou pour les en sortir, comprenant une entrée pour l'entrée des signaux et/ou des données et une sortie pour une entrée dans le réseau d'énergie ou pour une sortie du réseau d'énergie,
**caractérisé en ce que**
des transformateurs (13, 14) de largeur de bande différente sont, pour le couplage de signaux et/ou de données de fréquence différente, couplés à l'entrée (12) et à la sortie (20) commune du système (11) et **en ce que**
un domaine de fréquence haute et un domaine de fréquence basse sont définis,
dans lequel les domaines de fréquence sont aboutés dans le spectre de fréquence à une fréquence de 1 MHz et
dans lequel une compensation (31) de fréquence est prévue supplémentairement pour des signaux et/ou des données de basse fréquence et/ou de haute fréquence.

8. Système suivant la revendication 7,
**caractérisé en ce que**
un élément (34) actif d'amplification variable est prévu pour la compensation (31) de fréquence.

9. Système suivant la revendication 7 ou 8,
**caractérisé en ce que**
il est monté, en amont d'au moins un transformateur (13) pour le couplage de signaux de haute fréquence, à un condensateur (15), pour le blocage de signaux de basse fréquence et/ou, d'au moins un transformateur (14) pour le couplage de signaux de basse fréquence, un élément (16) inductif pour le blocage de signaux de haute fréquence.

10. Système suivant la revendication 9,
**caractérisé en ce que**
la capacité du condensateur (15) et/ou l'inductance de l'élément (16) inductif est choisie pour une séparation de signaux d'une fréquence plus grande et plus petite que 1 MHz.

11. Système suivant l'une des revendications 7 à 10,
**caractérisé en ce que**
en aval du au moins un transformateur (13), pour le couplage de signaux de haute fréquence, est monté un autre condensateur (21) ayant une capacité, qui peut être choisie et qui est différente de la capacité du condensateur (15) monté en amont du transformateur (13).

12. Système suivant l'une des revendications 7 à 11,
**caractérisé en ce que**
il est monté, en amont de la sortie (20) du système (11) une pluralité de bobines (19) de dérivation d'inductance différente.

13. Système suivant l'une des revendications 7 à 12,
**caractérisé en ce que**
un condensateur (3) de couplage est un éclateur (2) de séparation.

14. Système suivant la revendication 13,
**caractérisé en ce que**
le condensateur (3) de couplage a une capacité d'au moins 1 nF ou d'au moins 10 nF.

15. Système suivant la revendication 13,
**caractérisé en ce que**
le condensateur (3) de couplage a une capacité d'au moins 100 nF.
